# EUROPEAN PATENT APPLICATION

(11) **EP 2 056 275 A1**
(43) Date of publication of application: **06.05.2009**
(21) Application number: 07790903.4
(22) Date of filing: 18.07.2007
(51) Int. Cl.: G09C 1/00, H04L 9/20

(54) **PSEUDO RANDOM NUMBER GENERATOR, STREAM ENCRYPTING DEVICE, AND PROGRAM**

(30) Priority: 25.07.2006 JP 2006201796
(71) Applicant: NEC Corporation, Minato-ku Tokyo 108-8001 (JP)
(72) Inventor: HISAKADO, Toru, Tokyo 108-8001 (JP)
(74) Representative: Betten & Resch
(86) International application number: PCT/JP2007/064148
(87) International publication number: WO 2008/013083

(57) **Abstract**

A pseudo-random number generation device having a resistance against attack methods that use the number of operations of an LFSR, a stream encryption device, and a program are provided. The stream encryption device has: means (delay means 811 to 81N) which exclusively operate with each LFSR (801 to 80N) in the pseudo-random number generator, that is of a clock control type, and makes uniform the generation processing time or the power consumption of one output unit; or means which randomizes the generation processing time or the power consumption power of one output unit.

## Description

### TECHNICAL FIELD

(Related application): This application claims the benefit of priority of Japanese Patent Application No. 2006-201796 (application of July 25, 2006), the content of which is incorporated herein in its entirety by reference thereto.
The present invention relates to a pseudorandom number generation device, a stream encryption device, and a program, and in particular, to what is called a clock control type of pseudorandom number generation device, stream encryption device, and program, in which a plurality of linear feedback registers (referred to below as LFSRs) are used, and LFSR operation control is performed according to an internal state thereof, to generate random numbers.

### BACKGROUND ART

As data digitization of information progresses, encryption for implementing protection of information and confidential communication is becoming an essential technology. The encryption is broadly classified, based on encryption method used, into common key encryption (termed herein "symmetric key encryption") and public key encryption. The former symmetric key encryption is an encryption method which uses the same symmetric key, with regard to encryption and decryption, and the key is privately (secretly) stored. The other public key encryption has different keys for encryption and decryption, and one key of either thereof can be made public. In general, the symmetric key encryption is high speed and thus is used in communication of large quantities of data; and the public key encryption is low speed but key management is easy and thus the public key encryption is used in key distribution, signatures, and authentication for symmetric key encryption.

The symmetric key encryption can be classified, based on its configuration, into block encryption and stream encryption. The block encryption is a method in which encryption is performed by transpositions and operations on data divided into block units, while the stream encryption performs sequential encryption for each of prescribed output units (for example, 1 to several bits), using pseudo-random numbers outputted by a pseudorandom number generator. Among stream encryptions, A5/1 may be cited as a representative algorithm of a clock control method in which LFSRs are made to operate non-continuously.

The A5/1 is an operation control algorithm with 3 LFSR component elements. In general the LFSRs are used as generators of pseudo-random numbers, but since mathematical analysis can be easily done, usage as is, for encryption, is not possible. Consequently, in A5/1, by combining a plurality of LFSRs, and in addition by non-continuously controlling operation of the LFSRs, estimation of an internal state at a certain time is made difficult, and strength is provided for encryption. There are many proposals, outside of the A5/1, of stream encryption provided with this type of plurality of LFSRs and an operation controller which performs clock control thereof.

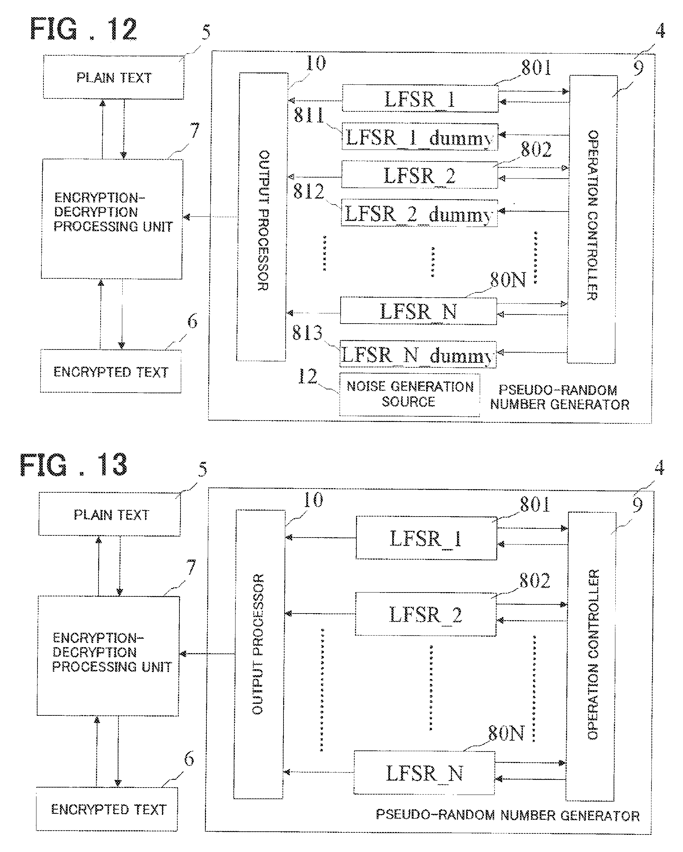

Fig. 13 is a configuration diagram of a stream encryption method which uses a clock control type of pseudo-random number generation device in which LFSRs, N in number, and an operation controller are installed. A pseudo-random number generator 4 is configured by being provided with the LFSRs 801 to 80N, the operation controller 9 which controls operation of each of the LFSRs, and an output processor 10 which determines output from the N LFSRs. The LFSRs 801 to 80N are LFSRs each with a different bit width and transition function, and the operation controller 9 controls shift operations of each LFSR based on internal states of each thereof. After shift control of each LFSR is ended, output of each LFSR is processed in the output processor, and is outputted as output of the pseudorandom number generator 4. Random numbers outputted from the pseudo-random number generator 4 are used, in an encryption-decryption processing unit 7, in encryption or decryption of plain text 5 or encrypted text 6.

However, to improve safety of encryption, private information, such as a key and the like, must be not capable of being easily estimated. Cryptanalysis methods such as linear cryptanalysis, differential cryptanalysis and the like, which perform mathematical cryptanalysis or exhaustive search for the key, are known, but it can be said that analysis within a realistic time is not possible.

On the other hand, assuming that an attacker is capable of precisely measuring processing time or power consumption, as with IC cards or mobile terminals with encryption functions, side channel attacks which attempt to obtain private information from information thereof, and strategies against these have become a large research theme.

As specific methods of attack among the abovementioned side channel attacks, timing attacks focusing on processing time (refer to Non-Patent Document 1), and power analysis attacks focusing on power consumption are known.

Power analysis attacks include Simple Power Analysis (SPA) and Differential Power Analysis (DPA) (refer to Non-Patent. Document 2). Furthermore, this document describes a specific method of attack with regard to DPA against a DES which is a known block encryption.

Furthermore, Patent Document 1 discloses a symmetric key block encryption device in which, aside from handling of vulnerabilities with respect to power analysis attacks to the above described block encryption, and a regular round function unit into which the plain text data is inputted, avoiding making a processing algorithm more complex, a dummy round function unit that executes dummy operations is provided, and attack resistance is increased by making power analysis more difficult.
[Patent Document 1]
   JP Patent Kokai Publication No. JP-P2006-54568A
[Non-Patent Document 1]
   Paul Kocher, "Timing Attacks on Implementations of Diffie-Hellman, RSA, DSS, and Other Systems", Crypto '96, pp. 104-113, 1996.
[Non-Patent Document 2]
   P. Kocher, J. Jaffe, B. Jun, "Introduction to Differential Power Analysis and Related Attacks", 1998.

### DISCLOSURE OF THE INVENTION

### PROBLEMS TO BE SOLVED BY THE INVENTION

The entire disclosures of the above mentioned Patent Document 1 and Non-Patent Documents 1 and 2 are incorporated herein by reference thereto.
The inventor of the present invention has found a very effective method of attack against a stream encryption method that uses a clock control type of pseudo-random number generator represented by the above described A5/1. First, this attack method is described.

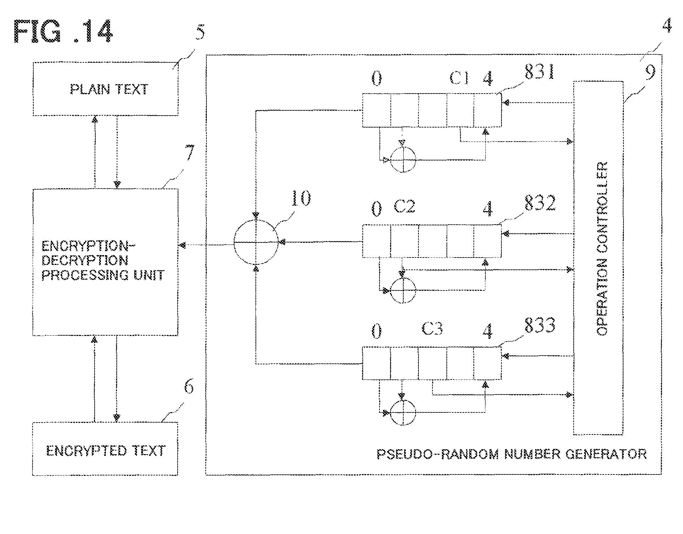

To simplify the description, consideration is given to cases in which an attempt is made to analyze a stream encryption system operating by clock control similar to the A5/1 algorithm configured from 3 LFSRs shown in Fig. 14. In normal analysis, a search is performed of an internal state based on an output result, but according to the present attack method, when it is possible to determine the number of times an LFSR operates (referred to below as "number of moves") as determined by the operation controller, it is possible to reduce the number of searches of the above described internal state.

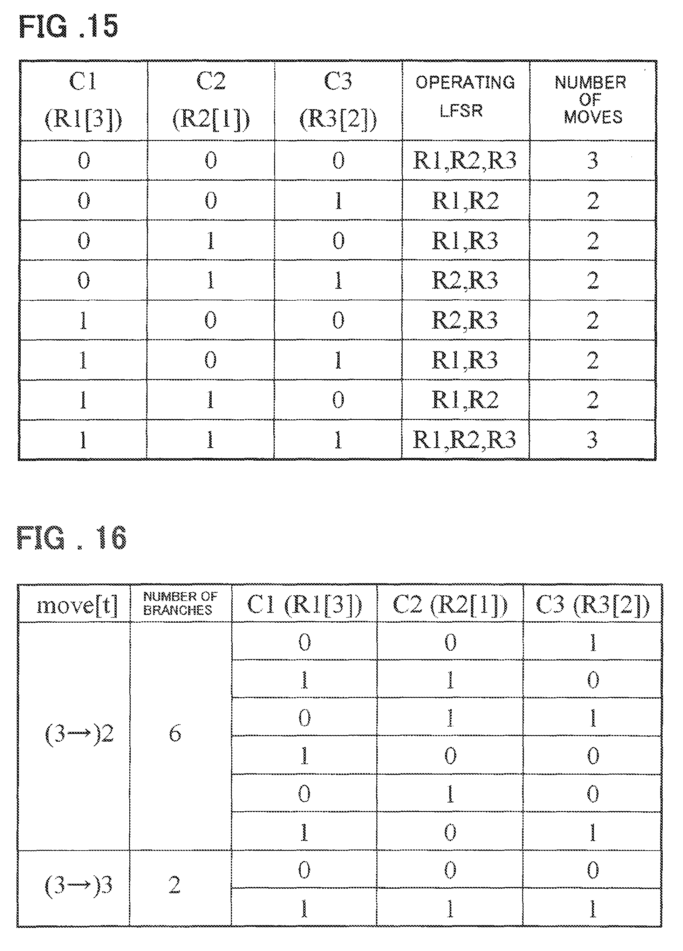

Here, each LFSR 831 to 833 may have an arbitrary bit length. Furthermore, the operation controller 9 performs majority decisions with respect to arbitrary bit register values of each LFSR, and operates a majority LFSR. In the abovementioned operation controller 9, an arbitrary register (C1 to C3 in Fig. 14), referred to when performing clock control, is called a clocking tap. Fig. 15 is a table showing relationships of clocking tap values and LFSRs that are operating. Here, since the number of LFSRs is 3, the number of LFSRs (number of moves) that are to be operated according to the majority decision is 2 or 13.

In searching internal states of each of the LFSRs 831 to 833, with the clocking tap as a node, a tree search is used in which the number of branches is determined from the number of moves of time t-1 to time t. The tree search, uses depth first search; when a certain depth is reached a consistency check with output is performed; and in cases in which an inconsistency is confirmed, search of that branch is stopped, and search of a next branch is performed. The search is performed until internal states of all the LFSRs are determined.

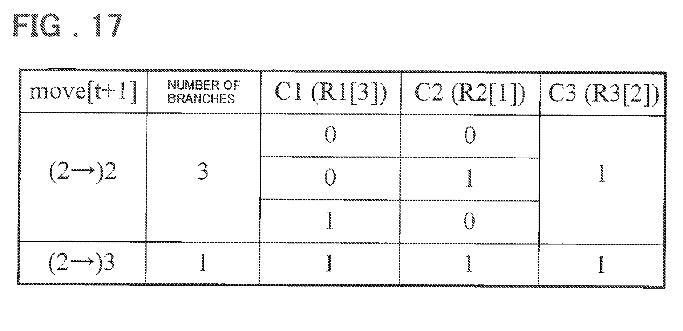

Fig. 16 shows relationships of the number of branches (combinations of internal states) determined in cases in which it is known that the number of moves at time t-1 is 3 (below, (X→)Y in the move[t] column in Fig. 16 and Fig. 17 indicates the number of moves X at a certain time and the number of moves Y at a subsequent time). For example, when the number of moves at time t is 2, LFSR operation at a subsequent time t+1 greatly depends on a state of the clocking tap at time t, Fig. 17 shows relationships of the number of branches determined in cases in which the LFSR 831 and the LFSR 832 only operate at time t, and the R3 clocking tap value is 1 (that is, a case in which C1 = 0, C2 = 0, and C3 = 1 in Fig. 16). As described above, normally in a search of internal states of 3 LFSRs, when the number of branches is 8, if the number of moves of time t-1 and time t is used, it is possible to reduce considerably the number of branches by a maximum of 6 and a minimum of 1.

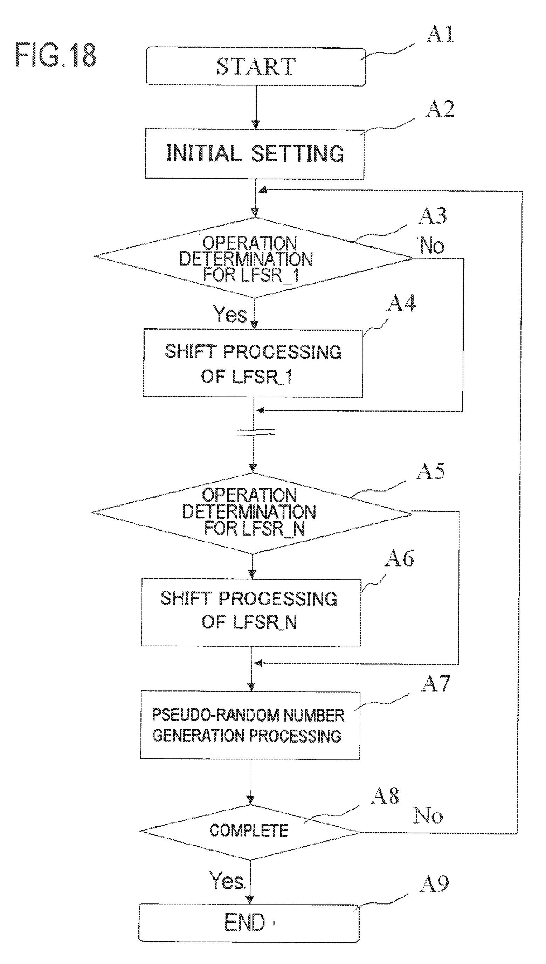

Here, a description is given concerning a method of determining the number of moves described above. Fig. 18 is a flow chart showing processing flow in a computer program that operates the LFSRs in the clock control method and generates a pseudo-random number. Referring to Fig, 18, operation of each LFSR is sequentially executed according to the program. On that account, a difference in processing quantity occurs when the number of moves is 2 and the number of moves is 3, and this difference appears as a difference in processing time for one output generation processing operation (one output unit). Therefore, in cases of software implementation, the difference in the above described processing time is determined from power waveform, and it is possible to determine the number of moves.

On the other hand, when the pseudo-random number generator that operates by the A5/1 algorithm is configured by LSI or FPGA hardware or the like, all processing is executed at approximately the same time. However, in such case also, from the fact that the number of LFSRs operating at the same time changes, by differences in the number of moves, a difference occurs in power consumption quantity in one output generation processing operation (one output unit). Therefore, in cases of hardware implementation also, it is possible to determine the number of moves using the size of the above described power consumption quantity.

As described above, the stream encryption method, configured from N LFSRs exemplified in Fig. 13, and which uses pseudo-random numbers generated in the clock control type pseudo-random number generator that controls operation of each LFSR according to the internal state thereof, has a problem in that the difficulty of cryptanalysis is reduced by an attack method that uses the above described number of moves.

The present invention has been made in view of vulnerability of the clock control type pseudo-random number generator as described above, and has as an object the provision of a pseudorandom number generation device, a stream encryption device, and a program, having resistance to the attack method proposed by the present inventor.

### MEANS TO SOLVE THE PROBLEMS

According to a first aspect of the present invention, there are provided: a pseudo-random number generation device of a clock control type that has N LFSR and performs operational control of each of the LFSRs according to an internal state of each of the LFSRs, to generate a pseudo-random number, characterized by comprising: means for making uniform generation processing time of one output unit, irrespective of the number of operations of the LFSRs;
a stream encryption device which uses the pseudo-random number outputted from the pseudo-random number generation device to perform encryption-decryption processing; and
a program for realization thereof.

According to a second aspect of the present invention, there are provided: a pseudo-random number generation device of a clock control type that has N LFSRs and performs operational control of each of the LFSRs according to an internal state of each of the LFSRs, to generate a pseudo-random number, characterized by comprising: means for varying generation processing time of one output unit, with a variation range larger than processing time necessary for at least one operation of an LFSR;
a stream encryption device which uses the pseudo-random number outputted from the pseudo-random number generation device to perform encryption-decryption processing; and
a program for realization thereof.

According to a third aspect of the present invention, there are provided: a pseudo-random number generation device of a clock control type that has N LFSRs and performs operational control of each of the LFSRs according to an internal state of each of the LFSRs, to generate a pseudo-random number, characterized by comprising: means for making constant power consumed in generation processing of one output unit;
a stream encryption device which uses the pseudo-random number outputted from the pseudo-random number generation device to perform encryption-decryption processing; and
a program for realization thereof.

According to a fourth aspect of the present invention, there are provided: a pseudo-random number generation device of a clock control type that has N LFSRs and performs operational control of each of the LFSR according to an internal state of each of the LFSRs, to generate a pseudo-random number, characterized by comprising: means for varying power consumed in generation processing of one output unit, with a variation range larger than power consumption necessary for at least one operation of an LFSR;
a stream encryption device which uses the pseudo-random number outputted from the pseudo-random number generation device to perform encryption-decryption processing; and
a program for realization thereof.

### MERITORIOUS EFFECTS OF THE INVENTION

According to the present invention since it is possible to conceal the number of operations of a LFSR required to generate one output unit, it is possible to obtain an encryption system in which resistance against an attack method proposed by the present inventor is improved.

### BRIEF DESCRIPTION OF THE DRAWING

Fig. 1 is a diagram showing a schematic configuration of an encryption-decryption processing device that is applicable to the present invention.
Fig. 2 is a configuration diagram of a stream encryption method according to a first exemplary embodiment of the present invention.
Fig. 3 is a flowchart showing operation of a pseudo-random number generator according to the first exemplary embodiment of the present invention.
Fig. 4 is a configuration diagram of a stream encryption method according to a second exemplary embodiment of the present invention.
Fig. 5 is a flowchart showing operation of a pseudo-random number generator according to the second exemplary embodiment of the present invention.
Fig. 6 is a configuration diagram of a stream encryption method according to a third exemplary embodiment of the present invention.
Fig. 7 is a flowchart showing operation of a pseudorandom number generator according to the third exemplary embodiment of the present invention.
Fig. 8 is a configuration diagram of a stream encryption method according to a fourth exemplary embodiment of the present invention.
Fig. 9 is a configuration diagram of a stream encryption method according to a fifth exemplary embodiment of the present invention.
Fig. 10 is a configuration diagram of a stream encryption method according to a sixth exemplary embodiment of the present invention.
Fig. 11 is a flowchart describing a modified embodiment of the present invention.
Fig. 12 is a configuration diagram describing the modified embodiment of the present invention.
Fig. 13 is a configuration diagram of a stream encryption method which uses a clock control type of pseudo-random number generator in which LFSRs, N in number, and an operation controller are installed.
Fig. 14 is a diagram describing a method of attack on a stream encryption system, as proposed by the present inventor.
Fig. 15 is a table showing relationships of clocking tap values and LFSRs that are operating, with regard to an A5/1 algorithm.
Fig. 16 is a table showing relationships of the number of branches (combinations of internal states) determined in cases in which the number of moves at time t-1 is known to be 3.
Fig. 17 is a table showing relationships of the number of branches determined in cases in which LFSR 831 and LFSR 832 only operate at time t, and an R3 clocking tap value is 1.
Fig. 18 is a flow chart showing processing flow in a computer program that operates LFSRs in the clock control method and generates a pseudo-random number.

### EXPLANATIONS OF SIGNS

- 1: arithmetic processing unit
- 2: input/output device
- 3: storage device
- 4: pseudo-random number generator (pseudo-random number generation device)
- 5: plain text
- 6: encrypted text
- 7: encryption-decryption processing unit
- 9: operation controller
- 10: output processor
- 11: random delay (processing) means
- 12: noise generation source
- 31: data storage unit
- 32: program storage unit
- 311: private key
- 321: encryption program (stream encryption program)
- 801 to 80N, 831 to 833: LFSRs
- 811 to 81N: delay (processing) means / dummy LFSRs
- 820: delay (processing) means
- 821 to 82M: dummy LFSRs
- C1, C2, C3: clocking taps

### PREFERRED MODES FOR CARRYING OUT THE INVENTION

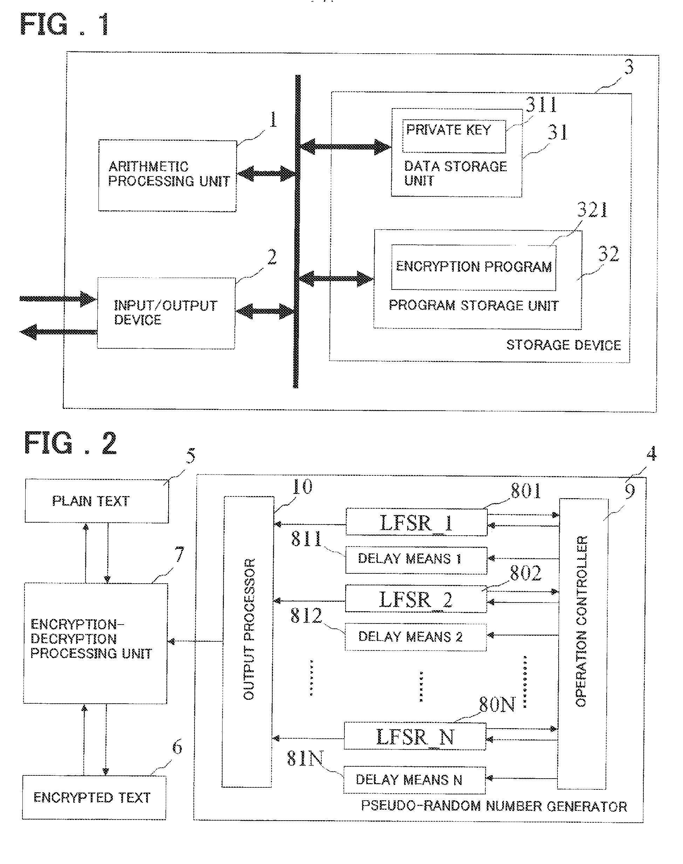

Next, preferred modes for carrying out the invention will be described, making reference to the drawings. Fig. 1 is a diagram showing a schematic configuration of a stream encryption-decryption processing device that is applicable to the present invention, Referring to Fig. 1, the stream encryption-decryption processing device is composed of an arithmetic processing unit 1 which executes arithmetic processing, described later, by program control, an input/output device 2 for performing exchange of encrypted text and data with an external device, and a storage device 3 which has a data storage unit 31 and a program storage unit 32.

The data storage unit 31 of the storage device 3 is a location at which various parameters necessary for program execution are stored, and an encrypted private key 311 is stored here. The program storage unit 32 is a location at which various programs necessary for the encryption-decryption processing device are stored, and an encryption program (stream encryption program) 321 for implementing processing means of each exemplary embodiment, described later, is stored here.

The abovementioned encryption-decryption processing device can be realized by various types of information processing device, such a personal computer (PC), mobile terminal, IC card, reader-writer, and the like, by installing software or hardware as described later. For example, in cases in which the encryption-decryption processing device is realized by a personal computer (PC), by reading the encryption program 321 stored in a supplementary storage device such as a magnetic disk or the like, not shown in the drawings, to the storage device 3, execution by the arithmetic processing unit 1 is possible.

### First Exemplary Embodiment

Next, a first exemplary embodiment of the present invention will be described, in which, by making uniform processing time required for one output generation processing operation (one output unit) in a process of generating a pseudo-random number, the number of LFSR operations (number of moves) for one output is concealed.

Fig. 2 is a configuration diagram of a stream encryption method according to the first exemplary embodiment of the invention. A pseudo-random number generator (pseudo-random number generation device) 4 is configured from N LFSR 801 to 80N, delay means 811 to 81N similar in number N to the LFSRs 801 to 80N, an operation controller 9 which controls these, and an output, processor 10 which determines output from the N LFSRs.

The delay (processing) means 811 to 81N are means which, with regard to the LFSRs 801 to 80N for which selection of shift processing, by the operation controller 9, was not performed, execute delay processing that consumes processing time approximately the same as shift processing of the LFSRs 801 to 80N.

An encryption-decryption processing unit 7 is a means for executing encryption or decryption of plain text 5 or encrypted text 6 using pseudo-random numbers outputted from the pseudo-random number generator 4.

Therefore, a point of difference from a conventional configuration shown in Fig. 13 is that delay means 811 to 81N, similar in number N to the N LFSRs, are added.

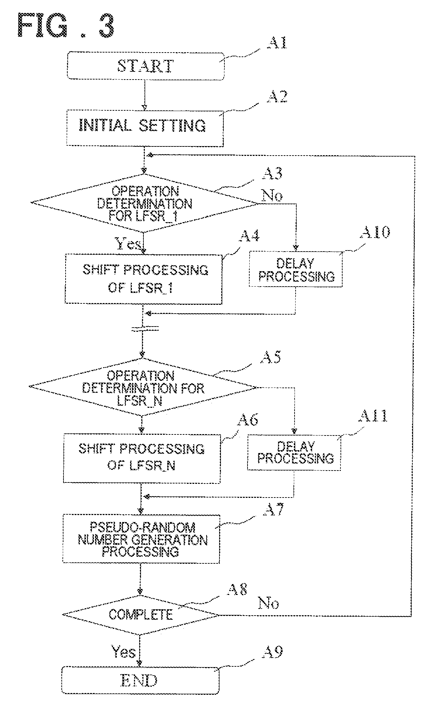

Next, operation of the pseudo-random number generator 4 composed as described above will be described. Fig. 3 is a flowchart showing operation of the pseudo-random number generator 4 according to the present exemplary embodiment.

First, an encryption program 1321 is started up by being called by another program (step A1), and first, initialization is performed as preparation for generating a pseudo-random number (step A2). In this initialization setting, agitation of internal data is performed by parameters of the private key and the like.

When the initialization of step A2 is completed, the operation controller 9 performs determination of operation for LFSR_1 (801 in Fig. 2), according to a prescribed selection reference (step A3).

Here, when the operation of the LFSR_1 (801 in Fig. 2) is selected, arbitrary bit shift processing is performed with regard to LFSR_1 (801) (step A4).

On the other hand, in cases in which the operation of the LFSR_1 (801 in Fig. 2) has not been selected, the operation controller 9 operates the delay means (811), and executes delay processing for processing time approximately the same as shift processing of the LFSR_1 (801 in Fig. 2) (step A10).

In the same way, respective processing accompanying the abovementioned operation determination and a determination result is performed for LFSR_2 to N(802 to 80N in Fig. 2) (step A5, step A6, and step A11).

After processing of all the LFSRs is completed, with internal states thereof as a basis, pseudo-random number generation processing of a prescribed output unit is performed (step A7).

A series of processing from step A3 to step A7 is repeatedly executed, and is completed at a point in time at which a pseudo-random number of a specified length is generated (steps A8 and A9).

As described above, according to the present exemplary embodiment, since in cases in which shift processing was not selected by the operation controller 9 also, delay processing of an approximately similar amount is necessarily carried out, a processing time of one operation is identical to a processing time when all LFSRs perform a shift operation, and is made uniform (constant). As a result, it is possible to make derivation of the private key by measuring the processing time from outside, difficult.

Moreover, using LFSRs of a size the same as the LFSRs 801 to 80N, as the delay means 811 to 81N, by performing shift control thereof by the operation controller 9, it is possible to realize the abovementioned delay processing. Furthermore, in addition, if processing is equivalent to shift processing time of each of the LFSRs 801 to 80N, it is possible to employ a means which executes delay processing such as Wait processing or the like.

In particular, in cases in which shift processing is executed by dummy LFSRs the same size as the former LFSRs, since not only the processing time but also commands executed by the arithmetic processing unit 1 are equivalent, an advantage of being stronger against power analysis deriving internal states from power consumption waveforms is also realized.

### Second Exemplary Embodiment

Next, in a method different, from the abovementioned first exemplary embodiment, a second exemplary embodiment of the present invention will be described in which, by making uniform processing time required for one output generation processing operation (one output unit) in a process of generating a pseudo-random number, the number of LFSR operations (number of moves) is concealed.

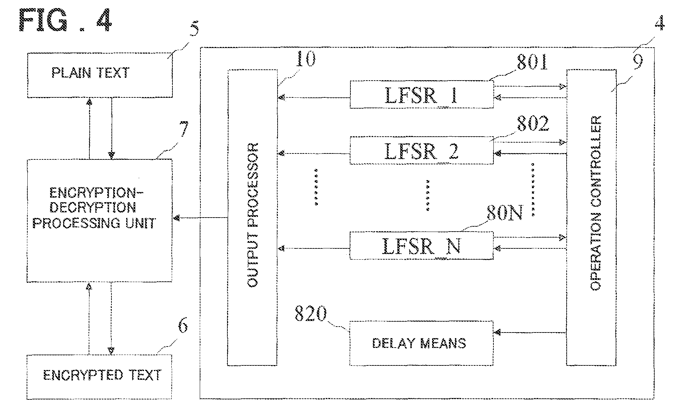

Fig. 4 is a configuration diagram of a stream encryption method according to a second exemplary embodiment of the present invention. A pseudo-random number generator (pseudo-random number generation device) 4 is configured by being provided with N LFSRs 801 to 80N, a delay means 820, an operation controller 9 which controls these, and an output processor 10 which determines output from the N LFSRs.

The delay means 820 is a means which, with regard to the LFSR 801 to 80N for which selection of shift processing, by the operation controller 9, has not been performed, executes delay processing that consumes processing time approximately the same as shift processing of the LFSRs 801 to 80N.

Therefore, a point of difference from the abovementioned first exemplary embodiment is that the delay means 820 is provided instead of the delay means 811 to 81N, similar in number N to the N LFSRs.

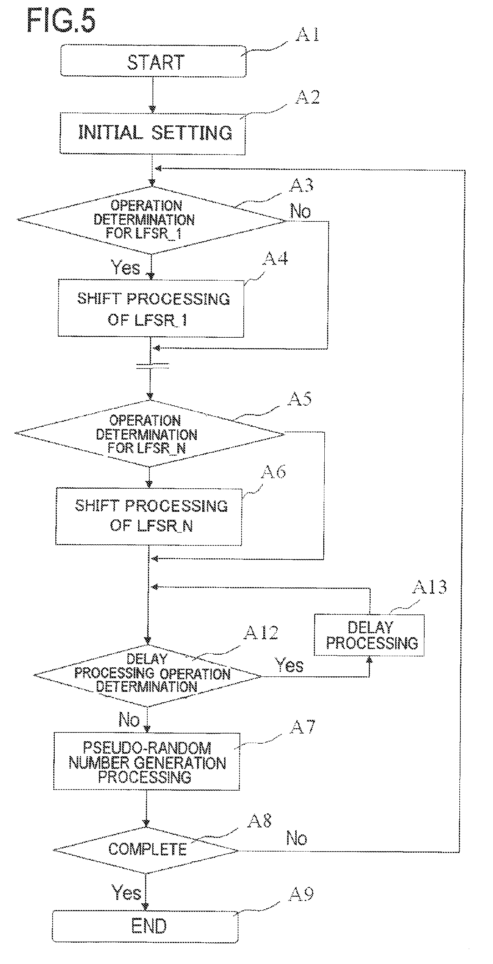

Next, operation of the pseudo-random number generator 4 composed as described above will be described. Fig. 5 is a flowchart showing operation of the pseudo-random number generator 4 according to the present exemplary embodiment.

Operations of the present exemplary embodiment shown in steps A1 to A6, A8, and A9 of Fig. 5 are similar to respective steps A1 to A6, A8, and A9 of the first exemplary embodiment, but in the present exemplary embodiment the operation controller 9 stores, by a counter or the like, the number of LFSRs for which shift processing was selected in operation determination for each LFSR.

After all LFSR operation determinations and accompanying shift processing have been completed, the operation controller 9 performs a comparison as to whether the number stored in the counter is equal to a predetermined number of shift processing operations (for example, the number N of LFSRs) (step A12; delay processing operation determination).

In cases in which, in the abovementioned comparison result the number stored in the counter is less than the predetermined number of shift processing operations, the operation controller 9 implements delay processing by the delay means 820, while incrementing the number stored in the counter (step A13).

Processing of the abovementioned step A12 and step A13 is repeated until the number stored in the counter is equal to the predetermined number of shift processing operations.

In the present exemplary embodiment, a series of processing from step A3 to step A7 (including steps A12 and A13) is repeatedly executed, and is ended at a point in time at which a pseudo-random number of a specified length is generated (steps A8 and A9).

As described above, in the present exemplary embodiment also, since in cases in which shift processing has not been selected by the operation controller 9 also, delay processing of an approximately similar amount is necessarily carried out, processing time of one operation is made uniform (made constant). As a result, it is possible to make derivation of the private key by measuring the processing time from outside, difficult.

Of course, in cases in which bit widths of the respective LFSRs 801 to 80N are each different, it is desirable to have the operation controller 9 send relevant bit width information to the delay means 820, and make it operate such that a delay is generated that is approximately the same as for LFSRs that have not been selected for operation, and make uniform (make constant) overall processing time of one operation.

Furthermore, in the present exemplary embodiment, a LFSR is used as the delay means 820, and by performing shift control thereof by the operation controller 9, it is possible to realize the abovementioned delay processing. Moreover, in addition, if processing is equivalent to shift processing time of each of the LFSRs 801 to 80N, it is possible to employ a means which executes delay processing such as Wait processing or the like.

Furthermore, in cases in which pseudo shift processing is executed by the LFSR as the abovementioned delay processing, since not only the processing time but also commands executed by the arithmetic processing unit 1 are equivalent, an advantage of being stronger (more resistant) against power analysis deriving internal states from power consumption waveforms is also realized.

### Third Exemplary Embodiment

Next, a third exemplary embodiment of the present invention will be described, in which, by varying processing time required for one output generation processing operation (one output unit) in a process of generating a pseudo-random number, the number of LFSR operations (number of moves) is concealed.

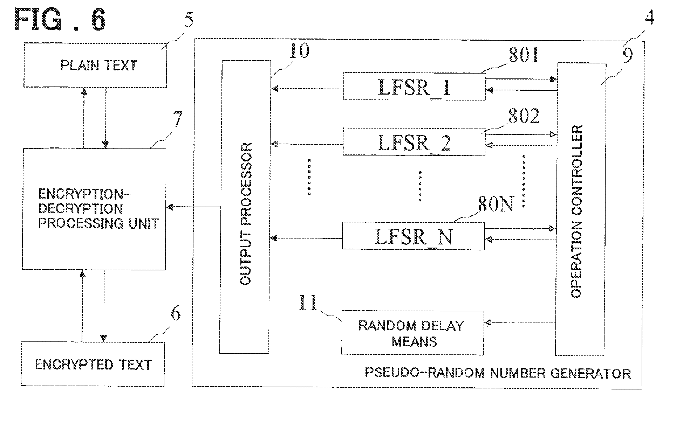

Fig. 6 is a configuration diagram of a stream encryption method according to the third exemplary embodiment of the present invention. A pseudo-random number generator (pseudo-random number generation device) 4 is configured by being provided with N LFSRs 801 to 80N, a random delay means 11, an operation controller 9 which controls these, and an output processor 10 which determines output from the N LFSRs.

The random delay means 11 is a means which executes random delay processing independently from internal states and behavior of the N LFSRs 801 to 80N. This type of delay processing can be implemented by, for example, processing executed by randomly selecting a plurality of operations having different processing times. As is clear from the object of concealing the number of LFSR operations (number of moves) as described above, variation range for each operation realized by this delay processing is larger than processing time necessary for at least one LFSR operation (shift processing).

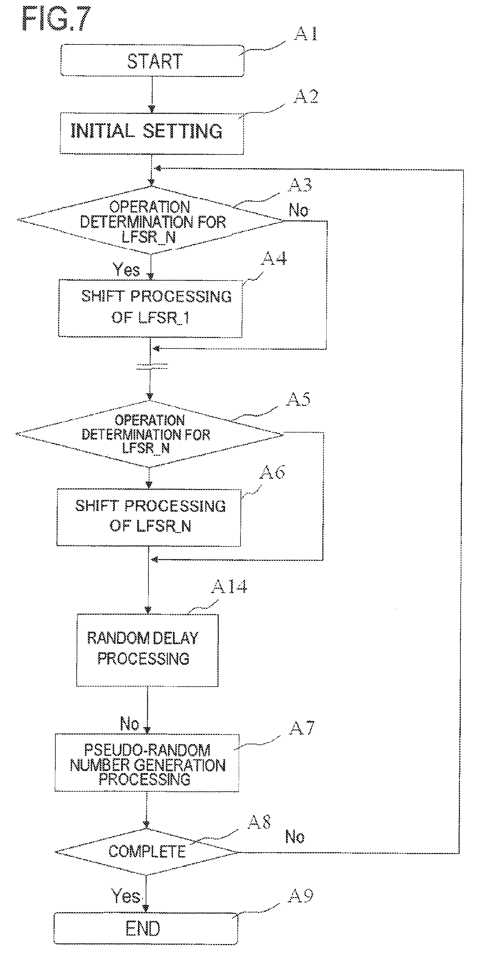

Next, operation of the pseudo-random number generator 4 configured as described above will be described. Fig. 7 is a flowchart showing operation of the pseudo-random number generator 4 according to the present exemplary embodiment.

Operations of the present exemplary embodiment shown in steps A1 to A6, and A7 to A9 of Fig. 7 are similar to respective steps A1 to A6, and A7 to A9 of the first exemplary embodiment, and are omitted.

At a time point when step A6 ends, the operation controller 9 makes the random delay means 11 operate (step A14).

As described above, in the present exemplary embodiment, processing time of one operation of generating a pseudo-random number can be made non-uniform, and it is possible to make derivation of a private key by measuring processing time from outside, difficult.

In the abovementioned exemplary embodiment, a description has been given in which one random delay processing operation is performed after all shift processing has been completed, but since an object is to make non-uniform and conceal time required for generation of one output unit, of a pseudo-random number, there is no particular limitation to the number of operations of, and execution timing of, the random delay processing. That is, it is possible to make an insertion an arbitrary number of times at an arbitrary location in steps A1 to A6 of Fig. 7.

In the abovementioned exemplary embodiment, a description has been given in which variation range of processing by the random delay processing is larger than processing time necessary for at least one LFSR operation (shift operation), but having a larger time variation, of course, enables derivation of actual processing time to be made difficult.

### Fourth Exemplary Embodiment

Next a fourth exemplary embodiment of the present invention will be described, in which, by making uniform (making constant) power consumption required for one output generation processing operation (one output unit) in a process of generating a pseudo-random number, the number of LFSR operations (number of moves) for one output is concealed.

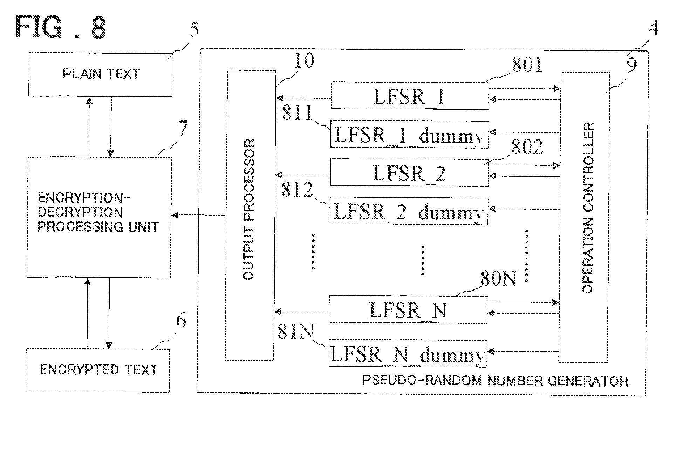

Fig. 8 is a configuration diagram of a stream encryption method according to the fourth exemplary embodiment of the present invention. A pseudo-random number generator (pseudo-random number generation device) 4 is configured by being provided with N LFSRs 801 to 80N, dummy LFSRs 811 to 81N, similar in number N to the LFSRs 801 to 80N, an operation controller 9 which controls these, and an output processor 10 which determines output, from the N LFSRs.

An encryption-decryption processing unit 7 is a means for executing encryption or decryption of plain text 5 or encrypted text 6 using pseudo-random numbers outputted from the pseudo-random number generator 4.

The N LFSRs 801 to 80N perform shift operations based on an operation selection of the operation controller 9, perform agitation while repeating shift processing on private information given in advance of a private key or the like, and retain post-agitation data.

The dummy LFSRs 811 to 81N are an LFSR group that operates with an identical transition function and with an identical bit width as the LFSRs 801 to 80N, and perform a shift operation exclusively with the LFSRs 801 to 80N, that is when corresponding LFSRs are in a halted state.

As described above, according to the present exemplary embodiment it is possible to make uniform the power consumption required for each operation of generating a pseudo-random number, and even assuming that power consumption is measured from outside, estimation of the number of LFSR. operations (number of moves) is difficult. Therefore, it is possible to make derivation of the private key by power analysis, difficult.

Moreover, in the abovementioned exemplary embodiment, a description has been given in which, in order to improve uniformity of the power consumption, the dummy LFSRs 811 to 81N operate with a similar transition function and with a similar bit width as the LFSRs 801 to 80N, but it is possible to add appropriate design changes within a range in which resistance to the abovementioned power analysis attack can be retained. For example, without being limited to the LFSR, it is possible to employ shift registers that consume power of an approximately similar amount, or to employ LFSRs having arbitrary bit widths and transition functions.

### Fifth Exemplary Embodiment

Next, in a configuration different from the abovementioned fourth exemplary embodiment, a fifth exemplary embodiment of the present invention will be described in which, by making power consumption required for one output generation processing operation (one output unit) uniform (constant) in a process of generating a pseudo-random number, the number of LFSR operations (number of moves) is concealed.

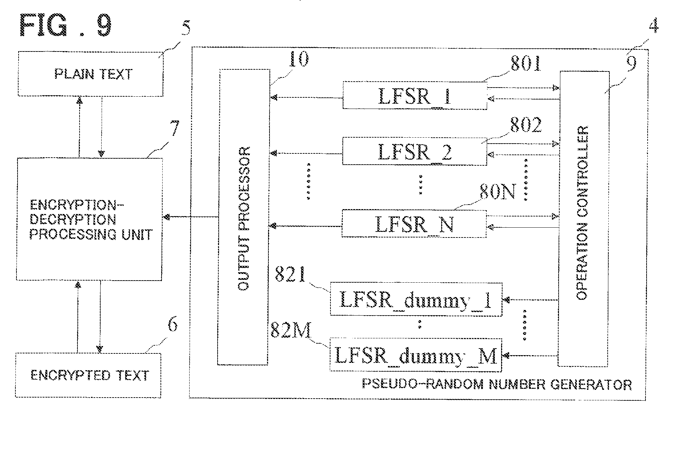

Fig. 9 is a configuration diagram of a stream encryption method according to the fifth exemplary embodiment of the present invention. A pseudo-random number generator (pseudo-random number generation device) 4 is configured from N LFSRs 801 to 80N, dummy LFSRs 821 to 82M of a similar number M as LFSRs that are stopped in a pseudo-random number generation algorithm, an operation controller 9 which controls these, and an output processor 10 which determines output from the N LFSR.

Therefore, a point of difference from the abovementioned fourth exemplary embodiment is that instead of providing N dummy LFSRs, the dummy LFSRs 821 to 82M of M in number, which is less than N, are sufficient. The number M of the abovementioned dummy LFSRs can, for example in cases in which LFSR that are operating are determined by a majority decision, be curtailed to less than half the total number of LFSRs.

The LFSR 801 to 80N perform a shift operation based on operation selection of the operation controller 9, perform agitation (or mixing) while repeating shift processing on private information given in advance such as a private key or the like, and retain post-agitation data.

In cases in which the LFSRs 801 to 80N have not been selected for operation by control of the operation controller 9, the dummy LFSRs 821 to 82M perform shift operations.

As described above, the dummy LFSRs are made to operate, the same as the LFSR in which shift processing has not been performed, and it is possible to make uniform power consumption required for one operation of generating a pseudo-random number. Therefore, in the present exemplary embodiment also, estimation of the number of LFSR operations (number of moves) is difficult, and derivation of the private key by power analysis is made difficult.

From a viewpoint of increasing uniformity of power consumption, it may be said that it is desirable that the dummy LFSRs 821 to 81M that operate with an identical transition function and an identical bit width as the LFSRs 801 to 80N be provided and selectively operated. Furthermore, with regard to the dummy LFSRs 821 to 81M, without being limited to LFSRs, it is possible to employ shift registers that consume power of an approximately similar amount.

### Sixth Exemplary Embodiment

Next, a sixth exemplary embodiment of the present invention will be described, in which power consumption required for one output generation processing operation (one output unit) in a process of generating a pseudo-random number is varied, and the number of LFSR operations (number of moves) is concealed.

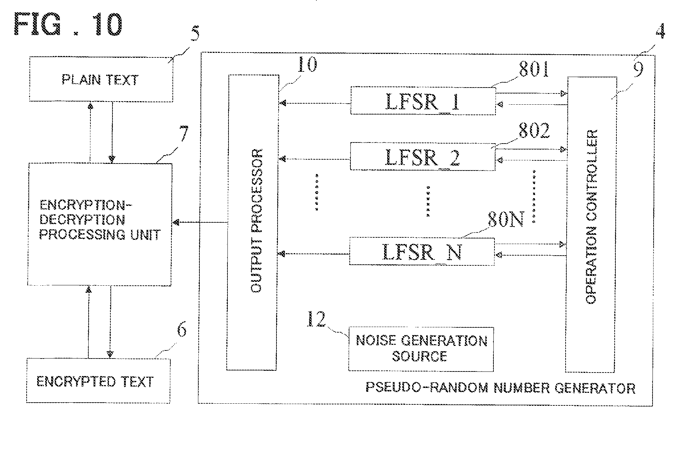

Fig. 10 is a configuration diagram of a stream encryption method according to the sixth exemplary embodiment of the present invention. A pseudo-random number generator (pseudo-random number generation device) 4 is configured by being provided with N LFSR 801 to 80N, an operation controller 9 which controls the N LFSR 801 to 80N, a noise generation source 12, and an output processor 10 which determines output from the N LFSRs.

The N LFSRs 801 to 80N perform shift operations based on an operation selection of the operation controller 9, perform agitation while repeating shift processing on secret information given in advance of a secret key or the like, and retain post-agitation data.

The noise generation source 12 is a random noise generation source device that operates independently from (does not depend on) internal states and behavior of the N LFSR 801 to 80N, and has variation of power that is larger than power consumed in shift processing of at least one LFSR.

As described above, in the present exemplary embodiment, power consumption of one operation of generating a pseudo-random number can be made non-uniform, and it is possible to make derivation of a secret key by measuring power consumption from outside, difficult.

In the abovementioned exemplary embodiment, a description has been given in which variation range of power produced by the noise generation source 12 is larger than the power consumption necessary for at least one LFSR operation (shift operation), but having a larger variation of power quantity, of course, enables derivation of actual LFSR power consumption to be made difficult.

A description has been given above concerning preferred exemplary embodiments of the present invention, but it is clearly possible to add various types of modification to the invention within a range that does not depart from the scope of the invention in which an attack method proposed by the present inventor is made ineffective by concealing the true number of LFSR operations.

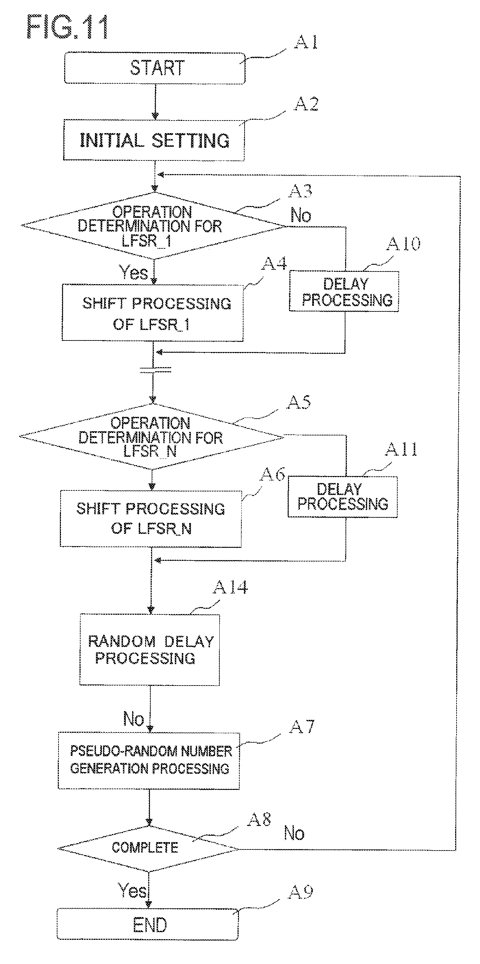

For example, as shown in Fig. 11, it is possible to make the delay (processing) means operate exclusively with operation of each LFSR and to make processing time for each operation uniform (equivalent to the abovementioned first exemplary embodiment), and also to make the random delay (processing) means operate and make analyzing more difficult.

Furthermore, as shown in Fig. 12, for example, it is possible to provide dummy LFSR that operate exclusively with operation of each LFSR and to make power consumption for each operation uniform (equivalent to the abovementioned fourth exemplary embodiment), and also to employ a configuration in which the noise generation source 12 is made to operate.

In addition, modifications and adjustments of embodiments and examples are possible within the bounds of the entire disclosure (including the scope of the claims) of the present invention, and also based on fundamental technological concepts thereof. Furthermore, a wide variety of combinations and selections of various disclosed elements are possible within the scope of the claims of the present invention.

### INDUSTRIAL APPLICABILITY

The present invention can be applied to all fields requiring an encryption system, but in view of characteristics of the abovementioned present invention, the invention can be preferably applied to devices that are required to be tamper resistant and to programs therefor.

Modifications and adjustments of exemplary embodiments and examples are possible within the bounds of the entire disclosure (including the scope of the claims) of the present invention, and also based on fundamental technological concepts thereof. Furthermore, a wide variety of combinations and selections of various disclosed elements are possible within the scope of the claims of the present invention.

## Claims

1. A pseudo-random number generation device that is of a clock control type, which has N linear feedback shift registers and performs operational control of each of said linear feedback shift registers according to an internal state of each of said linear feedback shift registers, to generate a pseudo-random number, **characterized by** comprising:
means for making uniform generation processing time of one output unit, irrespective of the number of operations of said linear feedback shift registers.

2. The pseudo-random number generation device according to claim 1, **characterized by**: comprising delay means for executing delay processing that consumes processing time approximately similar to operation processing of said linear feedback shift registers; wherein said generation processing time of one output unit is retained for generation processing time when all said linear feedback shift registers operate, by making said delay means repeatedly operate.

3. The pseudo-random number generation device according to claim 1, **characterized by**: comprising delay means for executing delay processing that consumes processing time approximately similar to operation processing of said linear feedback shift registers; wherein said generation processing time of one output unit is retained for generation processing time when all said linear feedback shift registers operate, by making said delay means operate exclusively with operation of each of said linear feedback shift registers.

4. The pseudo-random number generation device according to claim 3, **characterized by** comprising, as said delay means, dummy linear feedback shift registers of a similar number and similar size to said N linear feedback shift registers.

5. The pseudo-random number generation device according to any of claims 1 though 4, **characterized by** further comprising means for varying said generation processing time of one output unit, that was made uniform.

6. A pseudo-random number generation device of a clock control type, which has N linear feedback shift registers and performs operational control of each of said linear feedback shift registers according to an internal, state of each of said linear feedback shift registers, to generate a pseudo-random number, **characterized by** comprising:
means for varying generation processing time of one output unit, with a variation range larger than processing time necessary for at least one operation of a linear feedback shift register.

7. The pseudo-random number generation device according to claim 6, **characterized by**: comprising random delay means for executing delay processing that consumes random processing time that does not depend on an input parameter, wherein
said generation processing time of one output unit is varied, by making said random delay means operate.

8. A pseudo-random number generation device of a clock control type, which has N linear feedback shift registers and performs operational control of each of said linear feedback shift registers according to an internal state of each of said linear feedback shift registers, to generate a pseudo-random number, **characterized by** comprising:
means for making constant power consumed in generation processing of one output unit.

9. The pseudo-random number generation device according to claim 8, **characterized by** comprising: a dummy circuit for consuming power approximately similar to said linear feedback shift registers, wherein
power consumed in generation processing of one output unit is retained as power consumption when all said linear feedback shift registers operate, by making said dummy circuit operate repeatedly.

10. The pseudo-random number generation device according to claim 8, **characterized by** comprising: a dummy circuit for consuming power approximately similar to said linear feedback shift registers, wherein
power consumed in generation processing of one output unit is retained as power consumption when all said linear feedback shift registers operate, by making said dummy circuit operate exclusively with operation of each of said linear feedback shift registers.

11. The pseudo-random number generation device according to claim 10, **characterized by** comprising, as said dummy circuit, dummy linear feedback shift registers of a similar number and similar size to said N linear feedback shift registers.

12. The pseudo-random number generation device according to any of claims 8 through 11, **characterized by** further comprising means for varying said power consumed in generation processing of one output unit, which has been made constant.

13. A pseudo-random number generation device that is a clock control type, which has N linear feedback shift registers and performs operational control of each of said linear feedback shift registers according to an internal state of each of said linear feedback shift registers, to generate a pseudo-random number, **characterized by** comprising:
means for varying power consumed in generation processing of one output unit, with a variation range larger than power consumption necessary for at least one operation of a linear feedback shift register.

14. The pseudo-random number generation device according to claim 13, **characterized by** comprising:
a noise generation source that operates randomly without depending on an input parameter, wherein
said power consumed in generation processing of one output unit is varied, by an operation of said noise generation source.

15. A stream encryption device comprising said pseudo-random number generation device according to any one of claims 1 through 14.

16. A program implemented in a pseudo-random number generation device that is of a clock control type, which has N linear feedback shift registers and performs operational control of each of said linear feedback shift registers according to an internal state of each of said linear feedback shift registers, to generate a pseudo-random number, wherein
said program realizes a function of making uniform generation processing time of one output unit, irrespective of the number of operations of said linear feedback shift registers.

17. The program according to claim 16, **characterized by** retaining, in a computer built into said pseudo-random number generation device, said generation processing time of one output unit as generation processing time when all of said linear feedback shift registers operate, by repeatedly executing delay processing that consumes processing time of an approximately similar amount as operation processing of said linear feedback shift registers.

18. The program according to claim 16, **characterized by** retaining, in a computer built into said pseudo-random number generation device, said generation processing time of one output unit as generation processing time when all of said linear feedback shift registers operate, by executing delay processing that consumes processing time of an approximately similar amount as operation processing of said linear feedback shift registers, exclusively with operation of each of said linear feedback shift registers.

19. The program according to claim 18, **characterized in that** said generation processing time of one output unit is made uniform by making dummy linear feedback shift registers of a similar number and similar size to said N linear feedback shift registers operate exclusively with operation of each of said linear feedback shift registers.

20. The program according to any one of claims 16 through 19, further **characterized in that** a function is realized of varying said generation processing time of one output unit, which has been made uniform.

21. A program implemented in a pseudo-random number generation device that is of a clock control type, which has N linear feedback shift registers and performs operational control of each of said linear feedback shift registers according to an internal state of each of said linear feedback shift registers, to generate a pseudo-random number, said program realizing a function of varying generation processing time of one output unit, with a variation range larger than processing time necessary for at least one operation of a linear feedback shift register.

22. The program according to claim 21, **characterized in that** said generation processing time of one output unit is varied, by executing delay processing that consumes random processing time, which does not depend on an input parameter.

23. A stream encryption program for execution by a computer, including said program according to any one of claims 16 through 22, and further comprising processing for encrypting and decrypting an encryption stream using a pseudo-random number generated by said program.

24. A program implemented in a pseudo-random number generation device that is of a clock control type, which has N linear feedback shift registers and performs operational control of each of said linear feedback shift registers according to an internal state of each of said linear feedback shift registers, to generate a pseudo-random number, said program realizing a function of making constant power consumed in generation processing of one output unit.

25. A program implemented in a pseudo-random number generation device that is of a clock control type, which has N linear feedback shift registers and performs operational control of each of said linear feedback shift registers according to an internal state of each of said linear feedback shift registers, to generate a pseudo-random number, said program realizing a function of varying power consumed in generation processing of one output unit, with a variation range larger than power consumption necessary for at least one operation of a linear feedback shift register.
